# EUROPEAN PATENT APPLICATION

(11) **EP 0 643 386 A1**
(43) Date of publication of application: **15.03.1995**
(21) Application number: 94112522.1
(22) Date of filing: 10.08.1994
(51) Int. Cl.: G11B 7/09

(54) **Objective lens driving apparatus and optical head driving apparatus**

(30) Priority: 14.09.1993 JP 228745/93; 28.12.1993 JP 334825/93; 08.02.1994 JP 14259/94
(71) Applicant: KABUSHIKI KAISHA TOSHIBA, Kawasaki-shi, Kanagawa-ken 210 (JP)
(72) Inventor: Nagasato, Makoto, c/o Intellectual Property Div., Minato-ku, Tokyo 105 (JP); Uchiyama, Mineharu, c/o Intellectual Property Div., Minato-ku, Tokyo 105 (JP); Kokubo, Takahiro, c/o Intellectual Property Div., Minato-ku, Tokyo 105 (JP)
(74) Representative: Henkel, Feiler, Hänzel & Partner

(57) **Abstract**

An object lens driving apparatus for driving, in a focus direction and a tracking control direction, an objective lens (6) for converging light onto an optical recording medium includes a lens bobbin (7) for holding the objective lens. The lens bobbin is provided with two types of drive coils (8, 9) for driving the lens bobbin in the focus and tracking control directions. The lens bobbin is attached in a floating state to a frame-shaped magnetic yoke (11) via a pair of wiring suspensions (5) functioning as cantilevers. The magnetic yoke is provided with a magnet (10) for generating a magnetic field. The lens bobbin is situated such that the drive coils are placed within the magnetic field. The wiring suspensions are formed of flexible printed wiring members and have wiring patterns (2a-2d) and insulating films (1, 3) sandwiching the wiring patterns. The wiring patterns function as springs for substantially supporting the lens bobbin.

## Description

The present invention relates to an objective lens driving apparatus and an optical head driving apparatus for use in an optical information recording/reproducing apparatus for recording and/or reproducing an information signal on an optical recording medium such as an optical disk, etc.

An optical pickup device has conventionally been used as means for radiating a light beam on a signal recording surface of an optical disk, which is mounted on and rotated by a disk driving apparatus, thereby reading an information signal recorded on the optical disk or writing a predetermined information signal on the optical disk. In an already proposed structure of such an optical pickup device, a light source such as a semiconductor laser element is provided, and a light beam emitted from the light source is focused on a signal recording surface of an optical disk serving as optical recording medium via predetermined devices such as a collimator lens and a beam splitter and an objective lens. The light beam reflected from the signal recording surface is detected by a photodetector, write and/or read of an information signal on the signal recording surface is effected.

In the optical pickup device, the objective lens is provided with an objective lens driving apparatus for moving the objective lens by an electromagnetic driving force in two directions, i.e. an optical axis direction (or a "focus direction") and a direction perpendicular to the optical axis (or a "track width or tracking control direction"). Thereby, the light beam is focused on the signal recording surface and scans recording tracks exactly.

An example of an objective lens supporting member for supporting an objective lens movably in two directions is a structure wherein a lens bobbin to which an objective lens is attached is movably supported by support arms comprising four round rod members, as disclosed in Jap. U.M. Appln. KOKAI Publication No. 1-24524, or support arms constituted by combining parallel plate springs perpendicularly as disclosed in Jap. Pat. Appln. KOKAI Publication No. 2-179932.

In the objective lens driving apparatus including such support arms, the objective lens is moved on the basis of an output from a photodetector, thereby to carry out so-called "focus servo" and "tracking servo."

The focus servo enables a light beam to be exactly focused on a signal recording surface at all times, even if so-called surface fluctuation occurs while an optical disk is being rotated. Accordingly, while the focus servo is effected, the objective lens is moved so that the distance between the objective lens and the optical disk is always kept at a predetermined value.

On the other hand, the tracking servo enables a beam spot formed by a focused light beam to be exactly traced on a recording track formed on the signal recording surface, even if so-called center displacement occurs while the optical disk is being rotated.

As has been described above, in the prior art, the support arms for supporting the lens bobbin in the objective lens driving device comprise, for example, round rod members or parallel plate springs. However, in the case of four support arms comprising round rod members, each support arm needs to be attached to a lens bobbin for supporting the objective lens and the manufacture is complex.

In addition, in order to supply a controlling drive current to a focus coil and a tracking coil provided on the lens bobbin or a movable unit, a connection line needs to be provided between the lens bobbin and a fixed part. The connection line needs to be a resilient, very thin line, such as a litz wire, which can be moved in accordance with movement of the lens bobbin, without applying a great load on the movable unit of the objective lens. Since the litz line is thin and does not have sufficient mechanical strength, a connection work for the litz wire is difficult.

Under the circumstances, the above-mentioned Jap. Pat. Appln. KOKAI Publication No. 2-179932 proposes a structure as shown in FIG. 12, wherein power is supplied to a focus coil and a tracking coil for driving an objective lens 31 through a printed wiring member 32 attached to the surfaces of support arms 33 formed by combining parallel plate springs perpendicularly.

In this structure, however, resonance of the printed wiring member itself occurs and the control system tends to become unstable. Moreover, a complex mechanism is needed to fix the printed wiring member to the support arms, and the number of parts increases, resulting in difficult assembly.

As has been described above, in the conventional objective lens driving device, power is supplied to the focus coil and tracking coil for driving the objective lens through the printed wiring member attached to the surface of the support member comprising parallel plate springs. Consequently, resonance of the printed wiring member itself occurs, and the servo control system tends to become unstable. Furthermore, a complex mechanism is required to fix the printed wiring member to the support arm.

Conventional optical head driving apparatuses have the same problems.

The object of the present invention is to provide an objective lens driving apparatus and an optical head driving apparatus, which can overcome the above problems, reduce the number of parts, and prevent occurrence of high-order resonance, etc.

In the apparatus according to the present invention, an objective lens bobbin or an optical head is supported by a pair of resilient wiring suspensions each having, on at least one side surface thereof, a conductor wiring pattern of copper foil, etc. used as a spring member. A control drive current is supplied to a focus control drive coil and tracking control drive coils mounted on the bobbin or optical head. Thus, there is no need to provide connection lines, such as litz wires or additional suspensions, between the bobbin or optical head and a fixed part. Accordingly, the number of parts is reduced, the structure is simplified, and the assembly is made easier. Moreover, the bobbin or optical head can be driven with no high-order resonance, etc. and with good responsiveness to control drive current.

The pair of wiring suspensions may have substantially mutually symmetrical shapes and be arranged substantially in line-symmetry.

In the present invention, the wiring suspension may be formed such that a wiring pattern is provided on at least one side surface of a film substrate, a cover film is provided on the wiring pattern, and the film substrate and the wiring pattern are bonded by a visco-elastic body or the wiring pattern and the cover film are bonded by a visco-elastic body. Thereby, a peak of principal resonance can be reduced by a damping effect of the visco-elastic body serving as bonding material. Furthermore, the bobbin or optical head can be driven with no high-order resonance, etc. and with good responsiveness to control drive current.

According to a first aspect of the present invention, each of the wiring suspensions has a rectangular shape comprising a pair of first plate spring portions defined in a plane perpendicular to the tracking control direction and a pair of second plate spring portions provided between the first plate spring portions and defined in a plane perpendicular to the focus direction, each wiring suspension being connected to a base frame via one of the first plate spring portions and connected to the lens bobbin or optical head via the other of the first plate spring portions.

According to the first aspect of the present invention, it is possible to use a wiring suspension wherein the width of that part of a wiring pattern, which is not subjected to elastic deformation, is increased. Thereby, the rigidity of that part of the wiring pattern, which is not subjected to elastic deformation due to driving of the bobbin or optical head, can be increased. Since excess deformation can be prevented, the driving of the bobbin or optical head can be controlled exactly.

In the first aspect of the invention, the wiring suspension may be formed such that a plurality of wiring patterns are provided and the thickness of the wiring patterns located on the outside of a bent portion of the wiring suspension is made greater than that of the wiring patterns located inside of the bent portion. Thereby, in particular, when a bobbin support member or an optical head support member is integrally formed by bending, breakage of the outside wiring patterns which are subjected to great bending deformation can be prevented. At the same time, the shape of the bent portion is stabilized, and high reliability of operation is maintained.

According to a second aspect of the present invention, each of the wiring suspensions comprises a plate spring portion defined in a curved plane extending in parallel to a third direction perpendicular to the focus and tranking control directions, and each of the wiring suspensions being connected to a base frame and the lens bobbin or optical head via both end portions of the plate spring portion.

According to the second aspect of the invention, it is possible that the apparatus comprises support means constituted by a flexible wiring suspension, a moving element provided on the bobbin or optical head, and a fixed element for controlling the position of the bobbin or optical head by applying a magnetic field to the moving element. The support means supports at one end the bobbin or optical head. A middle portion of the support means is curved, and the other end portion thereof is fixed to a fixed part. The support means flexibly supports the bobbin or optical head in a floating state. The support means is integrally provided with wiring for electrical connection between the fixed part and the bobbin or optical head.

In the flexible wiring suspension according to the second aspect of the invention, a conductor wiring pattern of copper foil, etc. is formed on at least one surface of a resilient, rectangular film substrate, and the conductor wiring pattern is used as a spring member. The normal shape of the suspension is a semicircular curved shape, and the thickness direction of the substrate coincides with the radial direction of the curve. The wiring suspension can be moved in two axial directions, i.e. a direction defined by connecting both ends of the semicircular shape, and a direction defined by connecting an original center position of the semicircular shape and a shifted center position of the deformed semicircular shape. One end portion of the wiring suspension is connected to the bobbin or optical head driven by an electromagnetic moving element, and the other end portion thereof is fixed to a fixed part.

According to the second aspect of the invention, the flexible wiring suspension provides electrical connection between the bobbin or optical head and the fixed part and functions as an arm for supporting the bobbin or optical head. Thus, the peripheral structure is simplified, the assembly is made easier, and exact electrical connection is achieved. Besides, even if the flexible wiring suspension is a single member, a middle portion of the suspension is curved and the suspension can function as an actuator which can move in two directions, i.e. a vertical direction (focus direction) and a horizontal direction (tracking control direction). Vibration characteristics are stabilized and effective servo control is achieved.

The present invention can provide an objective lens driving apparatus and an optical head driving apparatus, which have a less number of parts, have simple structure, make the assembly easier, prevent occurrence of high-order resonance, and have vibration characteristics effective for servo control.

This invention can be more fully understood from the following detailed description when taken in conjunction with the accompanying drawings, in which:
FIG. 1 is a perspective view of a flexible wiring suspension of an objective lens driving apparatus shown in FIG. 2;
FIG. 2 is a perspective view of the objective lens driving apparatus according to an embodiment of the present invention;
FIG. 3 is an exploded perspective view of the objective lens driving apparatus shown in FIG. 2;
FIG. 4 is a perspective view of a flexible wiring suspension of an optical head driving apparatus shown in FIG. 6;
FIGS. 5A and 5B are partial cross-sectional views of the wiring suspensions shown in FIGS. 1 and 4;
FIG. 6 is a perspective view of the optical head driving apparatus according to another embodiment of the invention;
FIG. 7 is an exploded perspective view of the optical head driving apparatus shown in FIG. 6;
FIG. 8 is a perspective view of an optical head driving apparatus according to still another embodiment of the invention;
FIG. 9 is a perspective view of a flexible wiring suspension according to still another embodiment of the invention;
FIGS. 10A and 10B are cross-sectional views showing modifications of the flexible wiring suspensions shown in FIGS. 5A and 5B;
FIG. 11 is a cross-sectional view showing a modification of the flexible wiring suspension shown in FIG. 10B;
FIG. 12 is a perspective view of a conventional objective lens driving apparatus;
FIG. 13 is a perspective view of an optical head driving apparatus according to still another embodiment of the invention;
FIG. 14 is an exploded perspective view of the optical head driving apparatus shown in FIG. 13;
FIG. 15 illustrates the operation of the optical head driving apparatus shown in FIG. 13;
FIGS. 16A to 16C are a plan view, a bottom view and a cross-sectional view of a flexible wiring suspension of the optical head driving apparatus shown in FIG. 13;
FIG. 17 is a perspective view of an optical head driving apparatus according to still another embodiment of the invention;
FIG. 18 is a partial perspective view of the optical head driving apparatus shown in FIG. 17;
FIG. 19 is a perspective view of an objective lens driving apparatus according to still another embodiment of the invention;
FIG. 20 is a perspective view of an objective lens driving apparatus according to still another embodiment of the invention; and
FIG. 21 is a partial cross-sectional view of the apparatus shown in FIG. 20.

Preferred embodiments of the present invention will now be described with reference to the accompanying drawings.

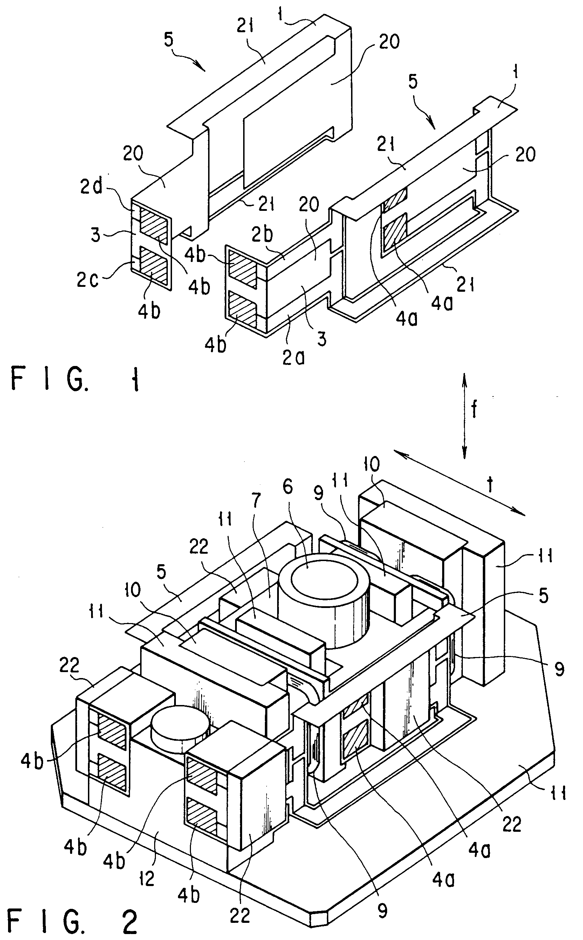

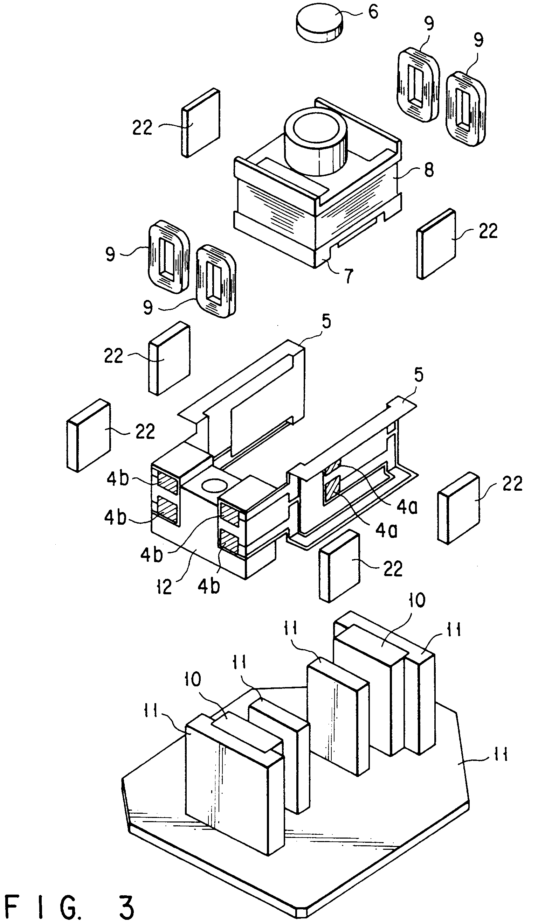

In an objective lens driving apparatus according to an embodiment of the present invention, flexible wiring suspensions 5 as shown in FIGS. 1 and 5A are used to support a lens bobbin 7, to which an objective lens 6 as shown in FIGS. 2 and 3 is attached, in a floating state such that the lens bobbin 7 is movable in mutually perpendicular two axial directions. Each flexible wiring suspension 5 is made of, e.g. a flexible printed wiring member. More specifically, as is shown in FIG. 5A, a plurality of wiring patterns 2a, 2b, 2c and 2d used as spring members are provided on one side surface of a resilient synthetic-resin film substrate 1. A resilient insulating cover film 3 of a synthetic resin is provided on the wiring patterns 2a, 2b, 2c and 2d, except for a plurality of land portions 4a and 4b (indicated by hatched lines) which are provided, as soldering areas, on both end portions of the wiring patterns 2a, 2b, 2c and 2d.

The material of the Wiring patterns 2a, 2b, 2c and 2d used as spring members is an electric conductor such as copper, beryllium copper, phosphorus bronze, etc. The film substrate 1 and insulating cover film 3 are made of refractory synthetic resin films having a not so high rigidity, e.g. fluororesins such as polyimide, polyamide-imide, aromatic polyamide (refractory nylon), polytetrafluoroethylene, etc. and polyester resins such as polyparabanic acid, polyethylene terephthalate, etc.

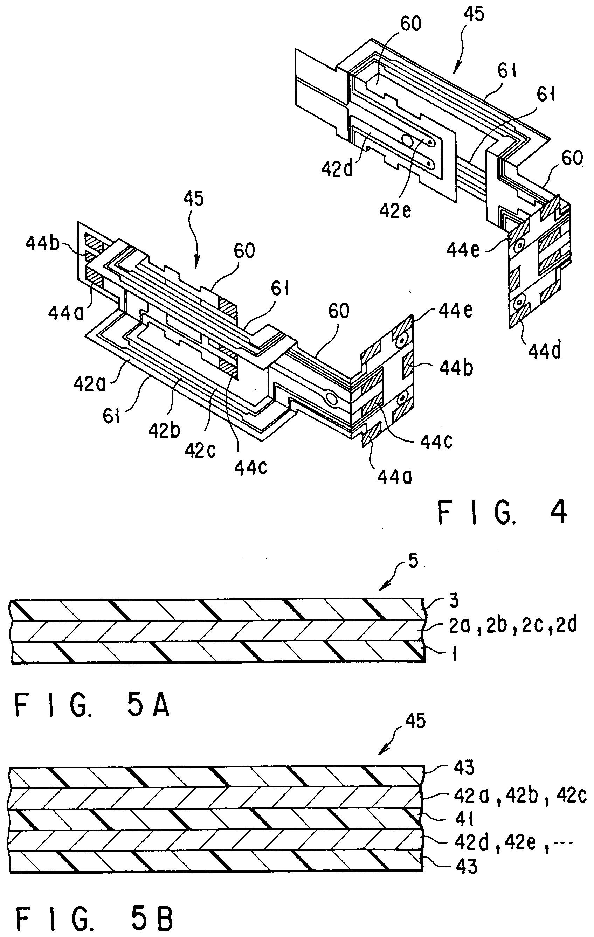

The suspension 5 having the cross-sectional structure as shown in FIG. 5A may be replaced with a flexible wiring suspension 45 having a cross-sectional structure as shown in FIG. 5B. The suspension 45 as shown in FIG. 5B is formed by providing a plurality of wiring patterns 42a, 42b, 42c, 42d, 42e,..., which are used as spring members, on both side surfaces of a resilient, synthetic-resin film substrate 41. A resilient insulating cover film 43 of a synthetic resin is provided on the wiring patterns 42a, 42b, 42c, 42d, 42e,..., except for a plurality of land portions 44a, 44b, 44c, 44d, 44e,... (indicated by hatched lines) which are provided, as soldering areas, on both end portions of the wiring patterns.

As regards the suspension 5 as shown in FIG. 5A, it is desirable that the film substrate 1 be 12.5 to 125 µm thick, the wiring patterns 2a, 2b, 2c and 2d be 17.5 to 70 µm thick, and the cover film 3 be 12.5 to 125 µm thick. In the suspension 45 as shown in FIG. 5B, it is desirable that the film substrate 41 be 25 to 50 µm thick, the wiring patterns 42a, 42b, 42c, 42d, 42e,... be 17.5 to 70 µm thick, and the cover film 43 be 12.5 to 125 µm thick.

As is shown in FIGS. 2 and 3, the objective lens driving apparatus comprises the objective lens 6 supported on the lens bobbin 7 and the flexible wiring suspensions 5 for flexibly supporting the objective lens 6. The driving apparatus further comprises driving coils 8 and 9 attached to the lens bobbin 7, a magnet 10 situated to face the driving coils, and a magnetic yoke 11 supporting the magnet 10. Sheet-shaped Fine Pattern Coils (trade name: Asahi Kasei (Kabushiki Kaisha)) may be used as the driving coils 8 and 9, thereby to enhance assembly precision and reliability and to reduce assembly cost.

The lens bobbin 7 is supported by the flexible wiring suspensions 5 so as to face the magnet 10 mounted within the magnetic yoke 11.

The lens bobbin 7 is provided with focus coil 8 and tracking coils 9 as driving coils for driving the objective lens 6 in two axial directions. A magnetic circuit is constituted by the magnetic yoke 11 and the magnet 10 which is attached to the magnetic yoke 11, in such a position as to face the lens bobbin 7. Accordingly, the objective lens 6 can be moved within the magnetic yoke 11 in two axial directions.

Each of the flexible wiring suspensions 5 for flexibly supporting the objective lens 6 in mutually perpendicular two axial directions is formed by bending a rectangular flexible printed wiring member, as shown in FIG. 1.

The flexible wiring suspension 5 having a bent rectangular shape is formed by bending a pair of support arm portions 21 in parallel to each other at right angles to a pair of coupling portions 20, as shown in FIG. 1. Since each support arm portion 21 is formed of an electric conductor spring member such as a copper foil, it functions as a plate spring in its longitudinal direction and is resiliently deformable in its thickness direction. In addition, since each coupling portion 20 is formed of an electric conductor spring member such as a copper foil, it is resiliently deformable only in its thickness direction perpendicular to the thickness direction of the support arm portion 21.

Parts of the coupling portions 20 are fixed on the lens bobbin 7 for supporting the objective lens 6 and on a support member 12 by means of a fixing member 22, as shown in FIGS. 2 and 3. The fixing member 22 may comprise any type of fixing means such as a screw, adhesive, etc. only if it can firmly fix the flexible wiring suspension 5 to the lens bobbin 7 and support member 12.

The support member 12 supports the flexible wiring suspensions 5. Specifically, the support member 12 is attached to the magnetic yoke 11, thereby supporting the flexible wiring suspensions 5. In the present embodiment, the flexible wiring suspensions 5 are attached on both sides of the lens bobbin 7 so as to support the objective lens 6. The focus coil 8 and tracking coils 9 provided on the lens bobbin 7 supported by the flexible wiring suspensions 5 are arranged to face the magnet 10 within the magnetic yoke 11. The magnet 10 and magnetic yoke 11 constitute a magnetic circuit.

Accordingly, a predetermined focus drive current is supplied to the focus coil 8, whereby the objective lens 6, which is supported by the flexible wiring suspensions 5 movably in the two axial directions, is moved within the magnetic yoke 11 along with the lens bobbin 7 in the optical axial direction of the objective lens 6 (indicated by arrow f in FIG. 2), i.e. in the focus direction. On the other hand, a predetermined tracking drive current is supplied to the tracking coils 9, whereby the lens bobbin 7 is moved in a direction (indicated by arrow t in FIG. 2) perpendicular to the optical axis of the objective lens 6, i.e. in the track width direction (tracking control direction). The support arm portions 21 function as a pair of plate spring portions defined in a plane perpendicular to the focus direction, and the coupling portions 20 function as a pair of plate spring portions defined in a plane perpendicular to the tracking control direction.

In order to supply a driving current to the focus coil 8 and tracking coils 9, the land portions 4a provided on the flexible wiring suspensions 5 are connected to coil terminal ends extended from the coils 8 and 9 by means of soldering, etc. On the other hand, the land portions 4b provided on the flexible wiring suspensions 5 are connected to external connection lines for supplying the control drive current by means of soldering, etc.

The flexible wiring suspension 5 having a bent rectangular shape is formed by bending the paired support arm portions 21 in parallel to each other at right angles to the paired coupling portions 20, as shown in FIG. 1. Thereby, the suspension 5 is made movable in the two axial directions, and the objective lens support member with very simple structure can be obtained.

The flexible wiring suspension 5 is formed by bending the electric conductor spring of uniform material such as copper foil. Accordingly, both portions of the suspension 5, which are movable in the two axial directions, respectively, are formed of the same material. Therefore, the resonance frequency is constant in the entire suspension 5 and occurrence of partial detrimental resonance can be prevented.

Moreover, since the support arms 21 and coupling portions 20 of the flexible wiring suspension 5 are movable, respectively, only in the mutually perpendicular directions, torsion or warp of the suspension 5 can be prevented at the time of driving the objective lens 6. Thus, the responsiveness of the suspension 5 can be enhanced.

Therefore, by supplying a predetermined current to the driving coils, the lens bobbin 7 is moved to a predetermined position and the focus servo and tracking servo can be carried out exactly.

In the above embodiment, the bobbin for supporting the objective lens is supported by the flexible wiring suspensions each having, on at least one side surface thereof, conductive wiring patterns of copper foil used as spring members. The control drive current is supplied to the focus control drive coil and tracking control drive coil mounted on the bobbin. Thus, there is no need to provide connection lines, such as litz wires or additional suspensions, between the bobbin and the fixed part. The number of parts is reduced, the structure is simplified, and the assembly is made easier.

The flexible wiring suspension having a bent rectangular shape is formed by bending the paired support arm portions in parallel to each other at right angles to the paired coupling portions. Thereby, the suspension is made resiliently movable in the two axial directions, and the objective lens support member of very simple structure is obtained.

The flexible wiring suspension is formed by bending the electric conductor spring of uniform material such as copper foil. Accordingly, both portions of the suspension, which are movable in the two axial directions, respectively, are formed of the same material. Therefore, the resonance frequency is constant in the entire suspension and occurrence of partial detrimental resonance can be prevented.

Furthermore, since the support arms and coupling portions of the flexible wiring suspension are movable, respectively, only in the mutually perpendicular directions, torsion or warp of the suspension can be prevented at the time of driving the objective lens. Thus, the responsiveness of the suspension can be enhanced.

Therefore, by supplying a predetermined current to the driving coils, the lens bobbin is moved to a predetermined position and the focus servo and tracking servo can be carried out exactly.

An optical head driving apparatus according to another preferred embodiment of the invention will be described with reference to the accompanying drawings.

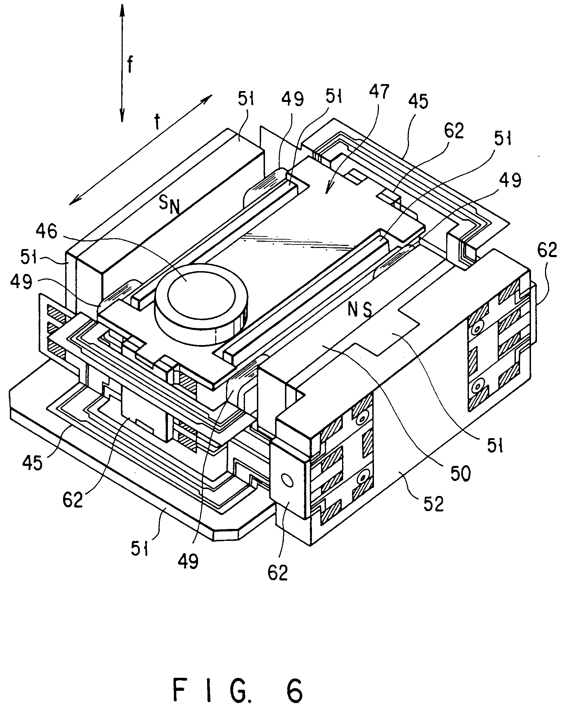

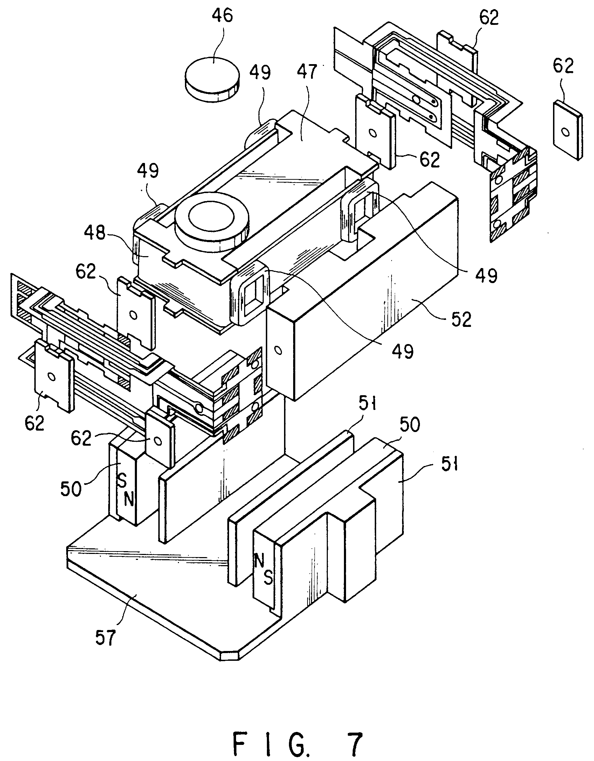

In a recording and/or reproducing optical head two-axis actuator, which is an example of the optical head driving apparatus according to the present embodiment, flexible wiring suspensions 45 as shown in FIGS. 4 and 5B are used to support an information signal recording and/or reproducing integrated optical head 47 as shown in FIGS. 6 and 7, in a floating state such that the head 47 is movable in mutually perpendicular two axial directions. Each flexible wiring suspension 45 is made of, e.g. a flexible printed wiring member. More specifically, the flexible wiring suspension 45 is formed by providing a plurality of wiring patterns 42a, 42b, 42c, 42d, 42e,..., which are used as spring members, on both side surfaces of a resilient, synthetic-resin film substrate 41. A resilient insulating cover film 43 of a synthetic resin is provided on the wiring patterns 42a, 42b, 42c, 42d, 42e,..., except for a plurality of land portions 44a, 44b, 44c, 44d, 44e,... (indicated by hatched lines) which are provided, as soldering areas, on both end portions of the wiring patterns. The optical head 47 contains an objective lens 46, a semiconductor laser element, a collimator lens, a beam splitter, a prism, a hologram optical element (not shown), a photo-detector (not shown), etc.

The material of the wiring patterns 42a, 42b, 42c, 42d, 42e,... used as spring members is an electric conductor such as copper, beryllium copper, phosphorus bronze, etc. The film substrate 41 and insulating cover film 43 are made of refractory synthetic resin films having a not so high rigidity, e.g. fluororesins such as polyimide, polyamide-imide, aromatic polyamide (refractory nylon), polytetrafluoroethylene, etc. and polyester resins such as polyparabanic acid, polyethylene terephthalate, etc.

The suspension 45 having the cross-sectional structure as shown in FIG. 5B may be replaced with a flexible wiring suspension 5 having a cross-sectional structure as shown in FIG. 5A. The suspension 5 as shown in FIG. 5A is formed such that a plurality of wiring patterns 2a, 2b, 2c and 2d used as spring members are provided on one side surface of a resilient synthetic-resin film substrate 1. A resilient insulating cover film 3 of a synthetic resin is provided on the wiring patterns 2a, 2b, 2c and 2d, except for a plurality of land portions 4a and 4b (indicated by hatched lines) which are provided, as soldering areas, on both end portions of the wiring patterns.

In the suspension 45 as shown in FIG. 5B, it is desirable that the film substrate 41 be 25 to 50 µm thick, the wiring patterns 42a, 42b, 42c, 42d, 42e,... be 17.5 to 70 µm thick, and the cover film 43 be 12.5 to 125 µm thick. In the suspension 5 as shown in FIG. 5A, it is desirable that the film substrate 1 be 12.5 to 125 µm thick, the wiring patterns 2a, 2b, 2c and 2d be 17.5 to 70 µm thick, and the cover film 3 be 12.5 to 125 µm thick.

As is shown in FIGS. 6 and 7, the recording and/or reproducing optical head two-axis actuator comprises the information signal recording and/or reproducing integrated optical head 47 containing the objective lens 46, semiconductor laser element, collimator lens, beam splitter, prism, hologram optical element, photodetector (not shown), etc.; flexible wiring suspensions 45 for flexibly supporting the integrated optical head 47; drive coils 48 and 49 attached to the integrated optical head 47; a magnet 50 situated to face the drive coils; and a magnetic yoke 51 for supporting the magnet 50.

Specifically, the information signal recording and/or reproducing integrated optical head 47 is supported by the flexible wiring suspensions 45 within the magnetic yoke 51 so as to face the magnet 50 mounted in the magnetic yoke 51.

The optical head 47 is provided with a focus coil 48 and tracking coils 49 as driving coils for driving the optical head 47 in two axial directions. A magnetic circuit is constituted by the magnetic yoke 51 and the magnet 50 which is attached to the magnetic yoke 51, in such a position as to face the optical head 7. Accordingly, the optical head 47 can be moved within the magnetic yoke 51 in two axial directions.

Each of the flexible wiring suspensions 45 for flexibly supporting the optical head 47 in mutually perpendicular two axial directions is formed by bending, as shown in FIG. 4, a rectangular flexible printed wiring member as shown in FIG. 5B. The flexible wiring suspension 45 having a bent rectangular shape is formed by bending a pair of support arm portions 61 in parallel to each other at right angles to a pair of coupling portions 60, as shown in FIG. 4. Since each support arm portion 61 is formed of an electric conductor spring member such as a copper foil, it functions as a plate spring in its longitudinal direction and is resiliently deformable in its thickness direction. In addition, since each coupling portion 60 is formed of an electric conductor spring member such as a copper foil, it is resiliently deformable only in its thickness direction perpendicular to the thickness direction of the support arm portion 61.

In order to prevent inclination of the integrated optical head 47 which is movable in two axial directions, the spring constant in the focus direction of the flexible wiring suspension 45 used as spring member and the spring constant in the tracking control direction thereof are set such that the difference between the two spring constants is within 20 % of the greater spring constant. The relationship of the spring constants in the focus direction and tracking control direction is applicable to the objective lens driving apparatus shown in FIG. 2.

The rigidity of the flexible wiring suspension 45 is increased by reducing the width of the wiring patterns on the longitudinally middle portions of the coupling portions 60 and support arm portions 61, which are subjected to elastic deformation, and increasing the width of the other portions.

Parts of the coupling portions 60 are fixed to the information signal recording and/or reproducing integrated optical head 47 and support member 52 by means of fixing members 62, as shown in FIGS. 6 and 7. The fixing member 62 may comprise any type of fixing means such as a screw, adhesive, etc. only if it can firmly fix the flexible wiring suspension 45 to the optical head 47 and support member 52.

The support member 52 supports the flexible wiring suspensions 45. Specifically, the support member 52 is attached to the magnetic yoke 51, thereby supporting the flexible wiring suspensions 45. In the present embodiment, the flexible wiring suspensions 45 are attached on both sides of the information signal recording and/or reproducing integrated optical head 47 so as to support the optical head 47. The focus coil 48 and tracking coils 49 provided on the optical head 47 supported by the flexible wiring suspensions 45 are arranged to face the magnet 50 within the magnetic yoke 51. The magnet 50 and magnetic yoke 51 constitute a magnetic circuit.

Accordingly, a predetermined focus drive current is supplied to the focus coil 48, whereby the optical head 47, which is supported by the flexible wiring suspensions 5 movably in the two axial directions, is moved within the magnetic yoke 51 in the optical axial direction of the objective lens 46 (indicated by arrow f in FIG. 6), i.e. in the focus direction. On the other hand, a predetermined tracking drive current is supplied to the tracking coils 49, whereby the optical head 47 is moved in a direction (indicated by arrow t in FIG. 6) perpendicular to the optical axis of the objective lens 46, i.e. in the track width direction (tracking control direction). The support arm portions 61 function as a pair of plate spring portions defined in a plane perpendicular to the focus direction, and the coupling portions 60 function as a pair of plate spring portions defined in a plane perpendicular to the tracking control direction.

If the predetermined focus drive current and tracking drive current are supplied to the focus coil 48 and tracking coils 49, the temperature of the casing of the integrated optical head 47 is raised due to coil heat. In order to prevent the temperature rise of the casing of the optical head 47, the coil resistance of the focus coil 48 and tracking coils 49 is set at 4 Ω or less. In the objective lens driving apparatus as shown in FIG. 2, the coil resistance of both drive coils is set to 4 Ω or less.

In order to supply drive currents to the focus coil 48 and tracking coils 49, coil terminal ends of the coils 48 and 49 are connected, through the land portions 44a, 44b, 44c, 44d, 44e,... provided on the flexible wiring suspensions 45, to control current supply external connection lines by means of soldering, etc.

At least two flexible wiring suspensions each having, on at least one side surface, conductor wiring patterns of copper foil, etc., are provided symmetrically, as shown in FIGS. 6 and 7. A set of signal lines from the photodetector and a set of drive current lines for supplying control drive current to the drive coils and semiconductor laser element are separately connected to the two flexible wiring suspensions 45. Thereby, the signal lines from the photodetector are prevented from being adversely affected by noise from the drive current lines.

It is desirable that the two flexible wiring suspensions 45 be identical, for the purpose of obtaining good focusing vibration characteristics and tracking vibration characteristics.

The flexible wiring suspension 45 having a bent rectangular shape is formed by bending a pair of support arm portions 61 in parallel to each other at right angles to a pair of coupling portions 60, as shown in FIG. 4. Thereby, the suspension 45 is made movable in the two axial directions, and the information signal recording and/or reproducing integrated optical head support member with very simple structure can be obtained.

The flexible wiring suspension 45 is formed by bending the electric conductor spring of uniform material such as copper foil. Accordingly, both portions of the suspension 45, which are movable in the two axial directions, respectively, are formed of the same material. Therefore, the resonance frequency is constant in the entire suspension 45 and occurrence of partial detrimental resonance can be prevented.

The rigidity of the flexible wiring suspension 45 is increased by reducing the width of the wiring patterns on the longitudinally middle portions of the coupling portions 60 and support arm portions 61, which are subjected to elastic deformation, and by increasing the width of the other portions. Thus, the integrated optical head 47 can be moved easily, while maintaining adequate rigidity.

Furthermore, since the support arms 61 and coupling portions 60 of the flexible wiring suspension 45 are movable, respectively, only in the mutually perpendicular directions, torsion or warp of the suspension can be prevented at the time of driving the integrated optical head. Thus, the responsiveness of the optical head can be enhanced.

Therefore, by supplying a predetermined drive current to the driving coils, the information signal recording and/or reproducing optical head 47 is moved to a predetermined position and the focus servo and tracking servo can be carried out exactly.

In the above embodiment, the information signal recording and/or reproducing integrated optical head is supported by the flexible wiring suspensions each having, on at least one side surface thereof, conductive wiring patterns of copper foil used as spring members. The control drive current is supplied to the focus control drive coil and tracking control drive coil mounted on the integrated optical head. Thus, there is no need to provide connection lines, such as litz wires or additional suspensions, between the optical head and the fixed part. Thus, the number of parts is reduced, the structure is simplified, and the assembly is made easier.

At least two flexible wiring suspensions each having, on at least one side surface, conductor wiring patterns of copper foil, etc., are provided symmetrically, and a set of signal lines from the photodetector and a set of drive current lines for supplying control drive current to the drive coils and semiconductor laser element are separately connected to the two flexible wiring suspensions. Thereby, the signal lines from the photodetector are prevented from being adversely affected by noise from the drive current lines.

By using two identical symmetric flexible wiring suspensions, good focusing vibration characteristics and tracking vibration characteristics can be obtained.

The flexible wiring suspension having a bent rectangular shape is formed by bending the paired support arm portions in parallel to each other at right angles to the paired coupling portions. Thereby, the suspension is made movable in the two axial directions, and the information signal recording and/or reproducing integrated optical head support member with very simple structure can be obtained.

The flexible wiring suspension is formed by bending the electric conductor spring of uniform material such as copper foil. Accordingly, both portions of the suspension, which are movable in the two axial directions, respectively, are formed of the same material. Therefore, the resonance frequency is constant in the entire suspension and occurrence of partial detrimental resonance can be prevented.

Since the support arms and coupling portions of the flexible wiring suspension are movable, respectively, only in the mutually perpendicular directions, torsion or warp of the suspension can be prevented at the time of driving the integrated optical head. Thus, the responsiveness of the optical head can be enhanced.

Therefore, by supplying a predetermined drive current to the driving coils, the information signal recording and/or reproducing optical head is moved to a predetermined position and the focus servo and tracking servo can be carried out exactly.

In the above embodiment, the integrated optical head 7 has been described. However, this invention is also applicable to a separate type optical system wherein the objective lens 6, a raising mirror, etc. are separated from the semiconductor laser element, photodetector, etc.

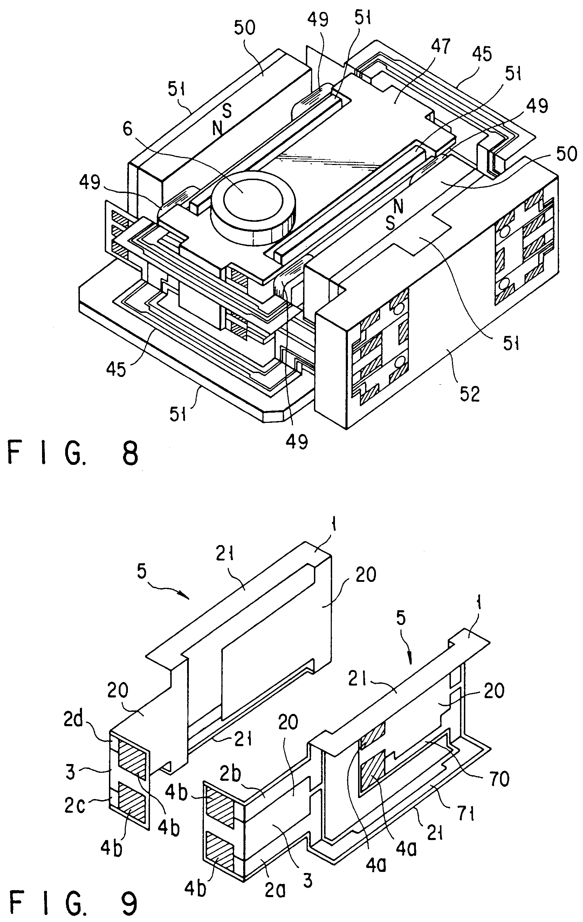

FIG. 8 shows an optical head driving apparatus according to still another embodiment of the present invention, which is a modification of the embodiment shown in FIG. 6. At least one of an information signal recording and/or reproducing integrated optical head 47 and a support member 52 is made of an engineering plastic material with a high-rigidity and a low linear expansion coefficient and is firmly and integrally fixed to parts of coupling portions 60 by injection molding.

Still another embodiment of the invention will now be described with reference to FIG. 9. An objective lens driving apparatus according to this embodiment is characterized by the shape of conductor wiring patterns 2a, 2b, 2c, 2d,... formed on the coupling portions 20 and support arm portions 21 of the flexible wiring substrate 1 of the flexible wiring suspension, as shown in FIG. 1. Specifically, the pattern width of longitudinally middle portions 70 and 71 of the wiring patterns, which are subjected to elastic deformation at the time of driving the objective lens 6 and lens bobbin 7, is reduced for easier deformation, and the pattern width of the other parts is increased to enhance rigidity. The other structural parts are common to those of the embodiment as shown in FIG. 1 and are denoted by like reference numerals. A description thereof is omitted.

By varying the wiring pattern width, in particular, the parts subjected to deformation are easily deformed by electromagnetic force, and high rigidity of the other parts is maintained. High rigidity of the entire structure can be obtained, while maintaining focusing and tracking performance.

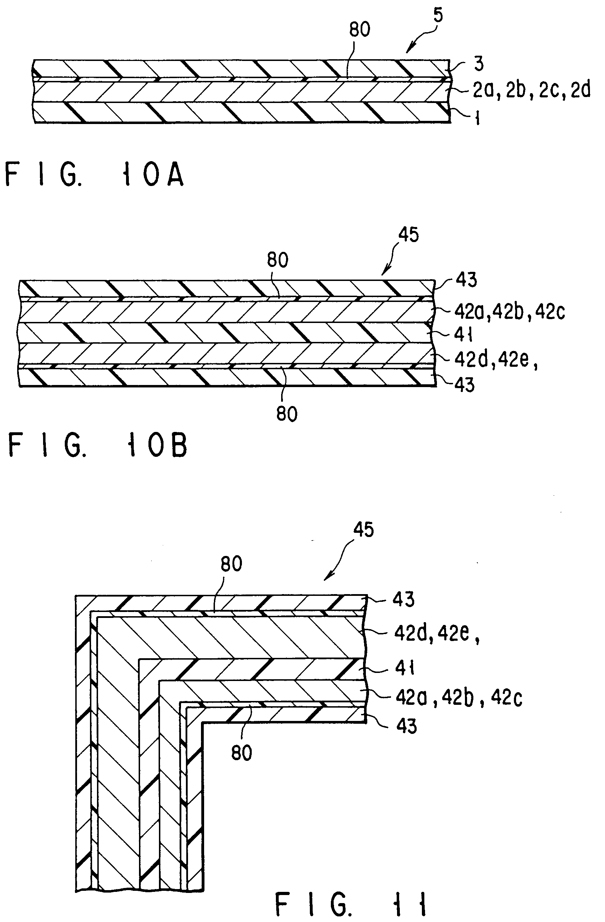

Still other embodiments of the invention will now be described with reference to FIGS. 10A and 10B. The embodiment of FIG. 10A is a modification of the flexible wiring suspension 5 as shown in FIG. 5A. In this modification, electric conductor wiring patterns 2a, 2b, 2C,... are formed on one side surface of a substrate 1, and an insulating cover film 3 is provided on the wiring patterns with a visco-elastic body 80 interposed therebetween as a bonding material. The visco-elastic body 80 is not a conventionally used thermoset epoxy adhesive, but is, e.g. a silicone gel, silicone rubber, etc. which are not hardened by heat and have a less time-based variation.

By virtue of the damping effect of the visco-elastic body 80, a peak of principal resonance at the time of focusing and tracking is reduced to 5 to 15 dB. In addition, the objective lens 6 and lens bobbin 7 can be driven, with no high-order resonance and good responsiveness to control drive current.

The embodiment shown in FIG. 10B is a modification of the flexible wiring suspension 45 shown in FIG. 5B. Electric conductor wiring patterns 42a, 42b, 42c, 42d, 42e...are formed on both side surfaces of a substrate 41, and insulating cover films 43 are formed on these wiring patterns with visco-elastic bodies 80 interposed therebetween as bonding materials. With this structure, a peak of principal resonance can be reduced by virtue of the damping effect of the visco-elastic bodies 80, and the integrated optical head 47 as shown in FIGS. 6 and 7 can be driven with no high-order resonance and with good responsiveness to control drive current.

In the case where the visco-elastic bodies 80 are provided on both surfaces of the substrate, as shown in FIG. 10B, one of the visco-elastic bodies 80 may be formed of a low-temperature/normal-temperature damping material having high damping effects at low and normal temperatures while the other may be formed of a high-temperature damping material having a high damping effect at high temperatures. Thereby, stable damping effects can be obtained independently from a temperature variation.

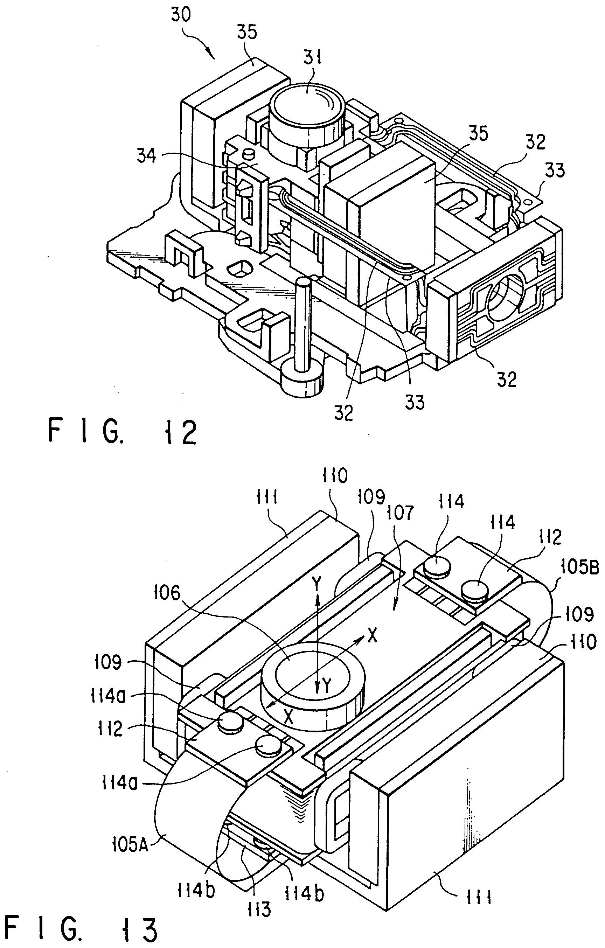

Still another embodiment of the present invention will now be described with reference to FIG. 11. This embodiment is a modification of the flexible wiring suspension 45 as shown in FIG. 5B. In this embodiment, thin conductor wiring patterns 42a, 42b and 42c are formed on one side surface of the substrate 41, and thick conductor wiring patterns 42d, 42e,... are formed on the other side surface of the substrate 41. Insulating cover films 3 are provided on these wiring patterns with visco-elastic bodies 80 interposed as bonding materials. The thin wiring patterns 42a, 42b and 42c are situated on the inside and the thick wiring patterns 42d, 42e,... are situated on the outside. By an integral bending process, a flexible wiring suspension 45 having a bent rectangular shape, as shown in FIG. 4, can be obtained.

By using the flexible wiring suspension 45 having the above structure, breakage of the outside wiring patterns which are subjected to great bending deformation can be prevented. At the same time, the shape of the bent portion is stabilized. Accordingly, if this embodiment is applied to the optical head driving apparatus as shown in FIGS. 6 and 7, the integrated optical head 47 can be operated with high reliability.

In this embodiment, the wiring patterns may be bonded to the insulating cover films by means of a thermoset adhesive, without using visco-elastic bodies 80.

The flexible wiring suspension 45 having the cross-sectional structure shown in FIG. 11 is applicable to the objective lens driving apparatus as shown in FIGS. 2 and 3. Thereby, breakage of the outside wiring patterns which are subjected to great bending deformation can be prevented. At the same time, the shape of the bent portion is stabilized. Accordingly, the objective lens 6 and lens bobbin 7 can be operated with high reliability.

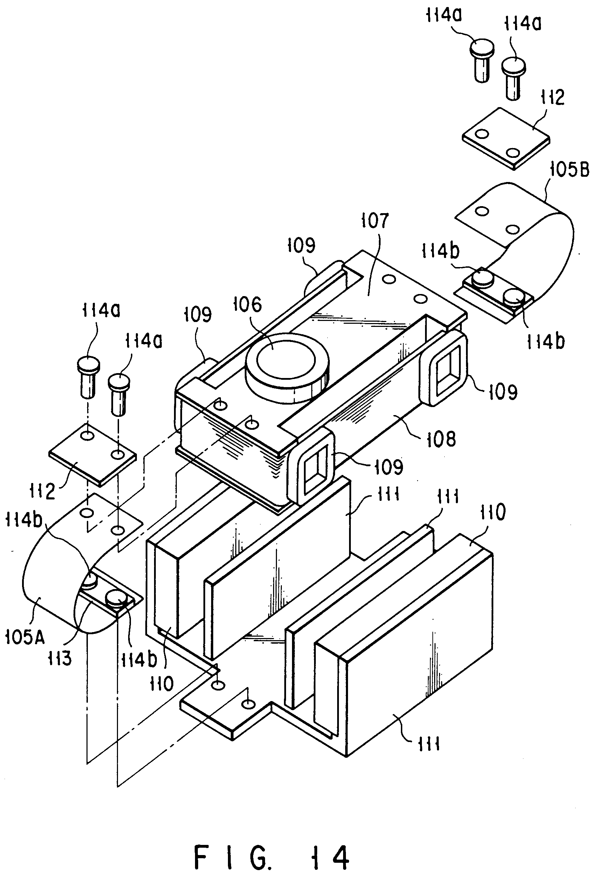

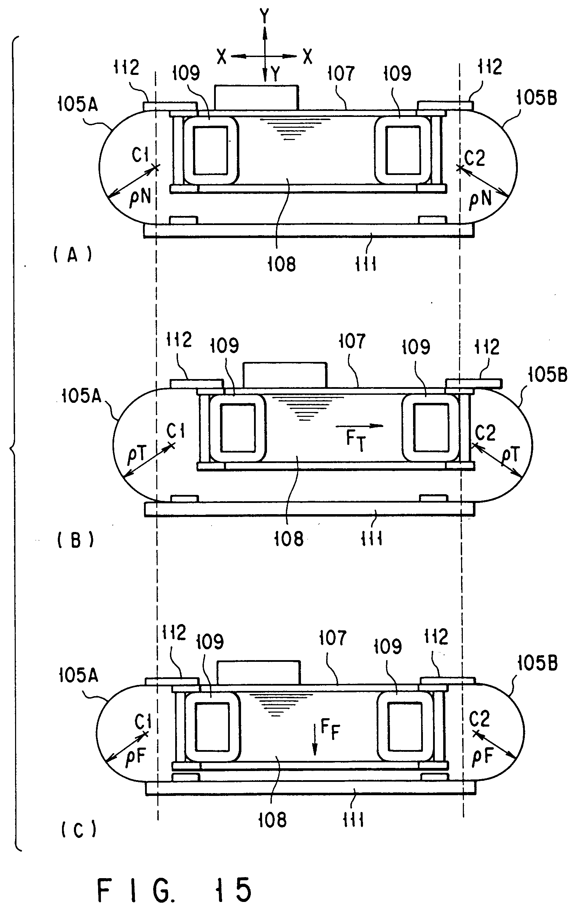

FIG. 13 shows an optical head driving apparatus in the assembled state according to still another embodiment of the invention, FIG. 14 is an exploded perspective view showing the same, and FIG. 15 illustrates the operation of the optical head driving apparatus. FIGS. 16A to 16C show the structures of the inventive flexible wiring suspension 105A, 105B.

The entire structure of the apparatus will now be described at first. An integrated optical head 107 for recording and/or reproducing an information signal on an optical disk contains an objective lens 106, a semiconductor laser element, a collimator lens, a beam splitter, a prism, a hologram optical element, a photodetector (not shown), etc. The integrated optical head 107 is constructed as a unit having a frame as a base. The optical head 107 has the objective lens 106 on the top surface thereof and a focus coil 108 on its side surface (i.e. surface of a wall-thickness portion). In addition, the optical head 107 has tracking coils 109 on the side surface at a plurality of locations (symmetric four locations). Front and rear end portions (in the tracking control direction) of the integrated optical head 107 are provided with flexible wiring suspensions 105A and 105B symmetrically. One of the suspensions 105A and 105B will be described representatively, with common numerals used. The frame of the optical head 107 is formed of an engineering plastic material with high rigidity and a low linear expansion coefficient.

One end portion of each of the flexible wiring suspensions 105A and 105B is fixed to a base member of the optical head 107 by means of fixing screws 114a passed through a guide plate 112 and alignment holes 116a. The other end portion of each of the wiring suspension 105A and 105B is fixed to a magnetic yoke 111 by means of fixing screws 114b passed through a holding plate 113 and alignment holes 116b. At this time, the flexible wiring suspensions 105A and 105B are curved and support the integrated optical head 107 in a floating state.

The magnetic yoke 111 comprises a bottom portion and upright side portions arranged in a direction perpendicular to the tracking control direction. Each of the upright side portions is provided with a magnet 110. The integrated optical head 107 is situated inside the magnetic yoke 111 or frame body, such that the tracking coils 109, etc. face the magnets 110. Electric connection lines necessary for the tracking coils 109, focus coil 108 and optical head 107 are connected via the wiring patterns on the flexible wiring suspensions 105A and 105B. Accordingly, if drive current is supplied to the focus coil 108 and tracking coils 109, the optical head 7 can be driven in an X-X direction (FIGS. 13 and 15) (tracking control direction) and a Y-Y direction (focus control direction). The flexible wiring suspensions 105A and 105B function as plate springs having curved surfaces extending in parallel to a third direction perpendicular to the X-X direction and Y-Y direction.

The mechanically neutral position of the flexible wiring suspensions 105A and 105B is shown in (A) of FIG. 15. The optical head 7 is set in the floating state by elastic force of the wiring suspensions 105A and 105B. The flexible wiring suspensions 105A and 105B are bent by the weight of the optical head 107 and an offset current supplied to the focus coil 108 and tracking coils 109, with their center positions C1 and C2 and radius of curvature ρN.

A position of the flexible wiring suspensions 105A and 105B which are shifted from the neutral position by tracking control is shown in (B) of FIG. 15. When a tracking control current is supplied to the tracking coils 109, the optical head 107 is shifted, for example, in a direction of arrow FT (perpendicular to the optical axis of the objective lens 106). At this time, the movement of the wiring suspensions 105A and 105B is restricted by the guide plates 112 and magnetic yoke 111. Thus, the suspensions 105A and 105B are bent with a radius of curvature of ρT which is substantially equal to the radius of curvature ρN in the neutral position shown in (A) of FIG. 15. In this case, the center positions C1 and C2 are shifted from the neutral position in the tracking control direction.

A position of the flexible wiring suspensions 105A and 105B which are shifted from the neutral position by focus control is shown in (C) of FIG. 15. When a focus control current is supplied to the focus coil 108, the optical head 107 is shifted in a direction of arrow FF (the optical axial direction of the objective lens 106), i.e. the focus direction. At this time, the movement of the wiring suspensions 105A and 105B is restricted by the guide plates 112 and magnetic yoke 111. Thus, the suspensions 105A and 105B are bent with a radius of curvature of ρF which is less than the radius of curvature ρN in the neutral position shown in (A) of FIG. 15. In this case, the center positions C1 and C2 are shifted outward from the neutral position shown in (A) of FIG. 15. On the other hand, if the direction of focusing force is reversed, or if the optical head 107 and magnetic yoke 111 are moved away from each other, the suspensions 105A and 105B are bent with a radius of curvature of ρF which is greater than the radius of curvature ρN in the neutral position shown in (A) of FIG. 15. In this case, the center positions C1 and C2 are shifted inward from the neutral position shown in (A) of FIG. 15.

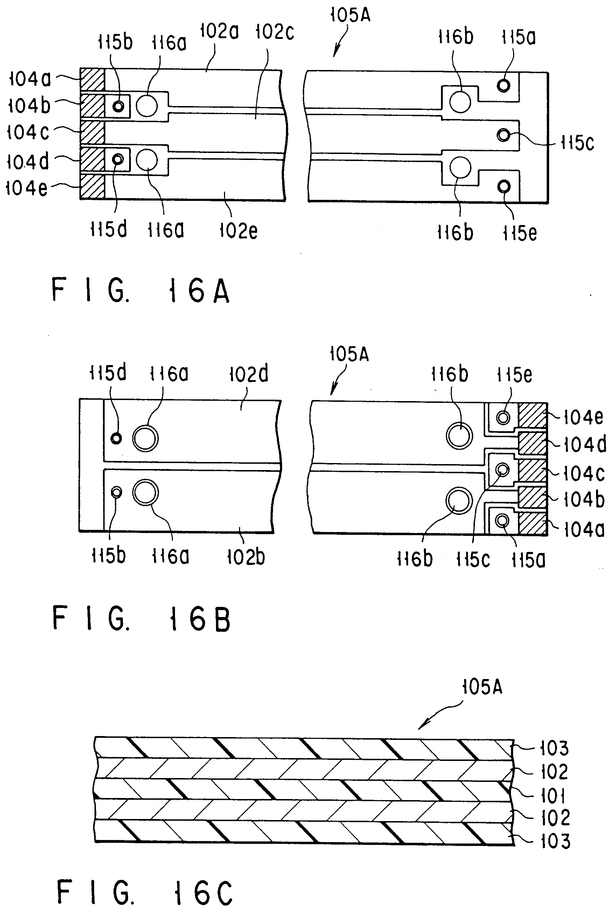

FIGS. 16A to 16C show the structure of the flexible wiring suspensions 105A and 105B. One of the suspensions, 105A, will be described representatively. FIGS. 16A, 16B and 16C show, respectively, one surface, the other surface, and a cross section of the suspension 105A. In the flexible wiring suspension 105A, 105B, a conductor wiring pattern 102 of copper foil, etc. formed on at least one surface of a resilient, rectangular film substrate 101 is basically used as a spring member. The normal shape of the suspension 105A, 105B is a semicircular curved shape, and the thickness direction of the substrate 101 coincides with the radial direction of the curve. The suspension 105A, 105B is movable in the X-X direction and Y-Y direction in FIG. 13. One end portion of the suspension 105A, 105B is connected to the head driven by an electromagnetic moving element, and the other end portion thereof is fixed to the fixed portion. The flexible wiring suspension 105A, 105B is formed of, e.g. a flexible printed wiring member.

More specifically, a plurality of wiring patterns used as spring members are provided on both surfaces of the resilient synthetic-resin film substrate 101. For example, wiring patterns 102a, 102c and 102e are provided on one surface of the substrate 101 and wiring patterns 102b, 102d, etc. are provided on the other surface thereof. The wiring patterns 102a, 102b, 102c, 102d, etc. are electrically connected to a plurality of land portions 104a, 104b, 104c, 104d, 104e, etc. (indicated by hatched lines) which are provided, as soldering areas, on both end portions of the wiring patterns via through-holes 115a, 115b, 115c, 115d, 115e, etc. In addition, the above-mentioned alignment holes 116a and 116b are formed in the wiring patterns. The upper surfaces of the wiring patterns are covered with insulating cover films 103.

The material of the wiring patterns used as spring members is an electric conductor such as copper, beryllium copper, phosphorus bronze, etc. The film substrate 101 and insulating cover film 103 are made of refractory synthetic resin films having a not so high rigidity, e.g. fluororesins such as polyimide, polyamide-imide, aromatic polyamide (refractory nylon), polytetrafluoroethylene, etc. and polyester resins such as polyparabanic acid, polyethylene terephthalate, etc.

In the suspension 105A as shown in FIG. 16C, it is desirable that the film substrate 101 be 25 to 50 µm thick, the wiring patterns 102 be 17.5 to 70 µm thick, and the cover film 103 be 12.5 to 125 µm thick.

The suspension 105A having the cross-sectional structure as shown in FIG. 16C may be replaced with a flexible wiring suspension 5 having a cross-sectional structure as shown in FIG. 5A. As has been described above, the suspension 5 as shown in FIG. 5A is formed such that the wiring patterns 2a, 2b, 2c and 2d and cover film 3 are provided on one side surface of the film substrate 1. In addition, as is shown in FIGS. 10A and 10B, the visco-elastic body 80 may be provided between the wiring pattern 102 and cover film 103.

It is desirable that the two flexible wiring suspensions 105A and 105B be identical, for the purpose of obtaining good focusing vibration characteristics and tracking vibration characteristics. However, according to the basic concept of the present invention, only a single wiring suspension may be provided on one side, and simple support means may be provided on the other side. Furthermore, since the flexible wiring suspension 105A, 105B is movable in the two axial directions, i.e. the focus and tracking control directions, as described above, the resonance frequency is constant in the entire suspension and occurrence of partial detrimental resonance can be prevented. In other words, if separate support members are provided for movements in the focus and tracking control directions, they have different resonance frequencies and detrimental resonance may occur. In the present system, however, the possibility of such detrimental resonance is low.

In the present embodiment, the flexible wiring suspensions 105A and 105B are attached to the optical head 107 and magnetic yoke 111 by means of fixing screws. However, the fixing screws may be replaced with other fixing means.

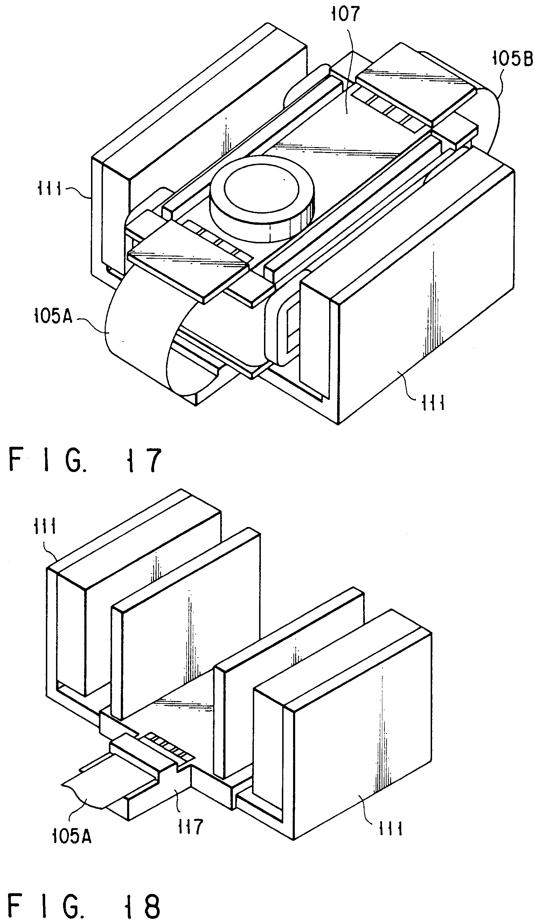

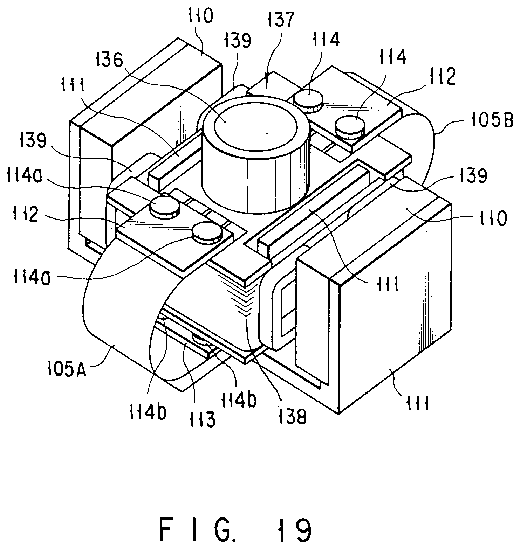

FIGS. 17 and 18 show another example of a fixing structure for fixing the flexible wiring suspensions 105A and 105B to the optical head 107 and magnetic yoke 111. The frame (base member) of the optical head 107 is formed of an engineering plastic material with high rigidity and a low linear expansion coefficient and is firmly and integrally fixed to one end portion of each of the suspensions 105A and 105B by injection molding. Similarly, an actuator base 117 to which the other end portion of each suspension 105A, 105B is connected is formed of an engineering plastic material with high rigidity and a low linear expansion coefficient, and is firmly and integrally fixed to the U-shaped magnetic yoke 111 and to the other end portion of each of the suspensions 105A and 105B by injection molding.

The above-described flexible wiring suspension is effectively used not only to support the head apparatus but also to support another type of floating member or to provide electrical connection between a movable element and a fixed part. In the above embodiment, wiring patterns are provided on both sides of the substrate, but wiring patterns may be provided on only one surface of the substrate. In the above embodiment, the optical head 107 is provided with the focus coil 108 and tracking coils 109. However, one end portion of the flexible wiring suspension may be provided with a moving element or a coil unit from the beginning.

In the above embodiment, the flexible wiring suspensions 105A and 105B are used. It is possible to supply focus and tracking control signals through the signal lines of one of the suspensions 105A and 105B and to transmit information signals relating to an optical disk through the signal lines of the other suspension. Thereby, interference of signals or mixture of noise can be prevented completely and exact control and signal transmission can be performed with high reliability. For example, detection signals from the photodetector may be supplied through one of the wiring suspensions, and control drive currents for the semiconductor laser element and drive coils may be supplied through the other wiring suspension. Thereby, noise from the drive current cannot be mixed in the detection signals.

In the above apparatus, there is no need to provide connection means such as litz wires or additional suspensions. Thus, the number of parts is reduced, the structure is simplified, and the assembly is made easier.

By using two identical symmetric flexible wiring suspensions each having, on at least one side surface thereof, conductor wiring patterns of copper foil, etc., good focusing vibration characteristics and tracking vibration characteristics can be obtained. In addition, since the rectangular flexible wiring suspension is formed in a curved shape, the suspension is made movable in the two axial directions, and the optical head apparatus with very simple structure can be obtained. Furthermore, since the flexible wiring suspension is formed by bending the conductor spring member of uniform material such as copper foil and the same parts are moved in the two directions, the resonance frequency is constant in the entire suspension and occurrence of partial detrimental resonance can be prevented.

FIG. 19 is a perspective view of an objective lens driving apparatus according to still another embodiment of the invention. The driving method of the apparatus of the present embodiment is substantially the same as that of the optical head driving apparatus shown in FIGS. 13 and 14. Accordingly, in FIG. 19, the elements common to those shown in FIGS. 13 and 14 are denoted by like reference numerals and a description thereof is omitted.

This objective lens driving apparatus has an objective lens 136 supported by a lens bobbin 137. The lens bobbin 137 is supported by the same flexible wiring suspensions 105A and 105B as in the preceding embodiment. The lens bobbin 137 is provided with a focus coil 138 and tracking coils 139. The coils 138 and 139 are arranged between one of two magnets 110 and part of a magnetic yoke 111.

Electric connection lines necessary for the focus coil 138 and tracking coils 139 are connected via the wiring patterns on the flexible wiring suspensions 105A and 105B. Accordingly, if drive current is supplied to the focus coil 138 and tracking coils 139, the lens bobbin 137 can be driven in mutually perpendicular two directions.

In this embodiment, there is no need to provide connection lines, such as litz wires or additional suspensions, between the bobbin and the fixed part. Therefore, the number of parts is reduced, the structure is simplified, and the assembly is made easier.

The flexible wiring suspension is formed by bending the electric conductor spring of uniform material such as copper foil. Accordingly, both portions of the suspension, which are movable in the two axial directions, respectively, are formed of the same material. Therefore, the resonance frequency is constant in the entire suspension and occurrence of partial detrimental resonance can be prevented.

Therefore, by supplying a predetermined drive current to the driving coils, the lens bobbin is moved to a predetermined position and the focus servo and tracking servo can be carried out exactly.

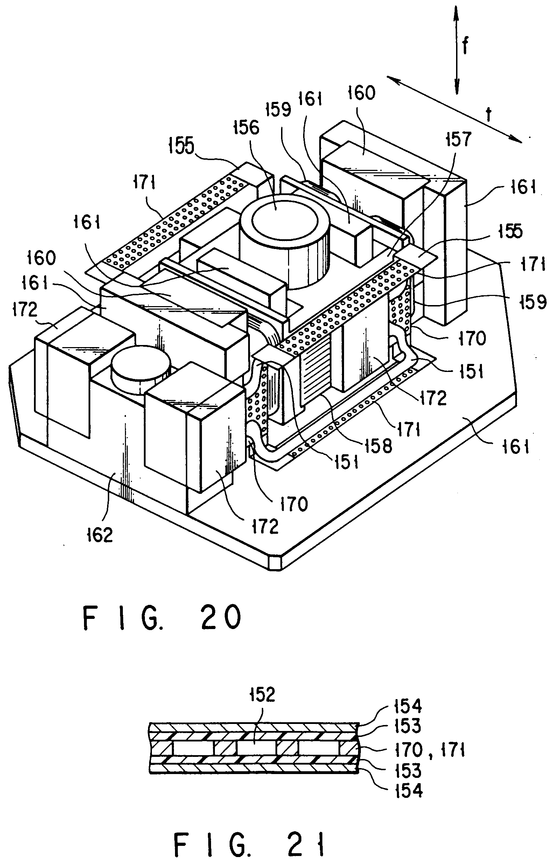

FIG. 20 is a perspective view showing an objective lens driving apparatus according to still another embodiment of the present invention. This apparatus comprises an objective lens 156 supported by a lens bobbin 157, and a pair of suspensions 155 for flexibly supporting the objective lens 156. The lens bobbin 157 is provided with a focus coil 158 and tracking coils 159 as two-directional drive coils. The focus coil 158 is horizontally wound around the lens bobbin 157. The tracking coils 159 comprise four ring-shaped coils which are provided, two by two, on two opposed side surfaces of the lens bobbin 157.

The lens bobbin 157 is supported on a frame-shaped magnetic yoke 161 by a pair of suspensions 155 serving as cantilevers. A support member 162 is formed on the magnetic yoke 161, and the suspensions 155 are fixed on the support member 162. The drive coils 158 and 159 are situated between one of two magnets 160 and part of the magnetic yoke 161. The magnets 160 and magnetic yoke 161 constitute a magnetic circuit.

Electric current is supplied to the drive coils 158 and 159 via printed wiring members 151 formed separately from the suspensions 155. By supplying drive current to the drive coils 158 and 159 via the printed wiring members 151, the lens bobbin 157 can be driven in mutually perpendicular two directions.

Each suspension 155 comprises a rectangular frame formed integrally of stainless steel. Each suspension 155 includes a pair of vertical portions 170 and a pair of horizontal portions 171. The horizontal portions 171 are bent at right angles to the vertical portions. The vertical portions 170 and horizontal portions 171 function as plate springs which are flexible at the time of driving the lens bobbin 157 in the tracking control direction (indicated by arrow t in FIG. 20) and focus direction (indicated by arrow f).

As is shown in FIG. 20, a part of each vertical portion 170 is fixed to the lens bobbin 157 and support member 162 by means of a fixing member 172. The fixing member 172 may comprise any type of fixing means such as a screw, adhesive, etc. only if it can firmly fix the suspension 155 to the lens bobbin 157 and support member 162.

Many holes 152 are formed in effective spring portions of the vertical portions 170 and horizontal portions 171. By virtue of the many holes 152, the flexural rigidity of each of the vertical portions 170 and horizontal portion 171 can be low enough even if the thickness of stainless steel, of which the suspension 155 is formed, is increased.

Laminar visco-elastic bodies 153, e.g. VEM (trade name: Scotch Co.), are bonded to both surfaces of each effective spring portion of the vertical and horizontal portions 170 and 171, as shown in FIG. 21. A holding plate 154 of aluminum is bonded to the visco-elastic body 153. By virtue of the damping effect of the visco-elastic body 153, a peak of principal resonance can be reduced to 5 to 15 dB, and the bobbin 157 of the objective lens can be driven with no high-order resonance and with good responsiveness to control drive current.

In the embodiment shown in FIG. 20, the bobbin 157 of the objective lens is driven, but the driving mechanism of this embodiment is also applicable to the driving mechanism of the information signal recording and/or reproducing integrated optical head as shown in FIG. 6 or FIG. 13. According to the concept of the embodiment of FIG. 20, not only an objective lens driving apparatus but also an optical head driving apparatus can be provided.

## Claims

1. An objective lens driving apparatus for driving, in a first direction along an optical axis and in a second direction perpendicular to the first direction, an objective lens (6) for converging light onto an optical recording medium, thereby to perform at least one of an operation of information recording on the optical recording medium and an operation of information reproduction from the optical recording medium, said objective lens driving apparatus comprising:
a lens bobbin (7) for holding said objective lens;
a first drive coil (8), provided on said lens bobbin, for driving said objective lens in said first direction;
a second drive coil (9), provided on said lens bobbin, for driving said objective lens in said second direction;
a magnetic field generating mechanism (10, 11) for generating a magnetic field to apply a drive force to said lens bobbin, in cooperation with electric current supplied to said first and second drive coils;
a base frame (11) for supporting said magnetic field generating mechanism; and
a pair of wiring suspensions (5) for connecting said lens bobbin to said base frame such that said lens bobbin is in a floating state and said first and second drive coils are situated in said magnetic field, said wiring suspensions being coupled to said lens bobbin at mutually facing two positions, each of said wiring suspensions including a resilient insulating substrate (1) and resilient conductor layers (2a-2d), provided on said substrate, for functioning as springs for substantially supporting said lens bobbin and for forming a plurality of lines for supplying electric current to said first and second drive coils.

2. The apparatus according to claim 1, characterized in that said pair of wiring suspensions (5) have substantially mutually symmetrical shapes and are arranged substantially in line-symmetry.

3. The apparatus according to claim 1, characterized in that each of said wiring suspensions (5) further includes a resilient insulating cover film (3) provided on said resilient conductor layers (2a-2d), said conductor layers being interposed between said substrate (1) and said cover film.

4. The apparatus according to claim 1, further including a visco-elastic layer (80), provided between said conductor layers (2a-2d) and said cover film (3), for damping vibration of each of said wiring suspensions (5).

5. The apparatus according to claim 1, characterized in that said conductor layers comprise first and second conductor layer portions (42a-42e) provided to sandwich said substrate (41).

6. The apparatus according to claim 5, characterized in that each of said wiring suspensions (5) has a bent portion, which is bent such that said first conductor layer portions (42a-42c) are situated on the inside, and said first conductor layer portions are thinner than said second conductor layer portions (42d, 42e) at said bent portion.

7. The apparatus according to claim 1, characterized in that each of said wiring suspensions (5) is formed of a flexible printed wiring member.

8. The apparatus according to claim 1, characterized in that each of said wiring suspensions (5) has a rectangular shape comprising a pair of first plate spring portions (20) defined in a plane perpendicular to said second direction and a pair of second plate spring portions (21) provided between said first plate spring portions and defined in a plane perpendicular to said first direction, each wiring suspension being connected to said base frame (11) via one of said first plate spring portions and connected to said lens bobbin (7) via the other of said first plate spring portions.

9. The apparatus according to claim 8, characterized in that a difference between a spring constant in the second direction of each of said first plate spring portions (20) and a spring constant in the first direction of each of said second plate spring portions (21) is within 20 % of the greater one of said spring constants.

10. The apparatus according to claim 8, characterized in that the width of said conductor layers (2a-2d) is less in middle portions of said first and second plate spring portions (20, 21) than in both end portions thereof.

11. The apparatus according to claim 1, characterized in that each of said wiring suspensions (105A, 105B) comprises a plate spring portion defined in a curved plane extending in parallel to a third direction perpendicular to said first and second directions, and each of said wiring suspensions being connected to said base frame (111) and said lens bobbin (137) via both end portions of said plate spring portion.

12. The apparatus according to claim 11, characterized in that said lens bobbin (137) includes a casing of a plastic material and said casing and said wiring suspensions (105A, 105B) are coupled by injection molding.

13. The apparatus according to claim 11, characterized in that said base frame (111) is formed of a plastic material, and said base frame and said wiring suspensions (105A, 105B) are coupled by injection molding.

14. An optical head driving apparatus having at least an objective lens, a semiconductor laser element and a photodetector, for driving, in a first direction along an optical axis and in a second direction perpendicular to the first direction, an optical head (47) for performing at least one of an operation of information recording on the optical recording medium and an operation of information reproduction from the optical recording medium, said optical head driving apparatus comprising:
a first drive coil (48), provided on said optical head, for driving said optical head in said first direction;
a second drive coil (49), provided on said optical head, for driving said optical head in said second direction;
a magnetic field generating mechanism (50, 51) for generating a magnetic field to apply a drive force to said optical head, in cooperation with electric current supplied to said first and second drive coils;
a base frame (51) for supporting said magnetic field generating mechanism; and
a pair of wiring suspensions (45) for connecting said optical head to said base frame such that said optical head is in a floating state and said first and second drive coils are situated in said magnetic field, said wiring suspensions being coupled to said optical head at mutually facing two positions, each of said wiring suspensions including a resilient insulating substrate (41) and resilient conductor layers (42a-42d), provided on said substrate, for functioning as springs for substantially supporting said optical head and for forming a plurality of lines for supplying electric current to said first and second drive coils.

15. The apparatus according to claim 14, characterized in that said pair of wiring suspensions (45) have substantially mutually symmetrical shapes and are arranged substantially in line-symmetry.

16. The apparatus according to claim 14, characterized in that each of said wiring suspensions (45) further includes a resilient insulating cover film (43) provided on said resilient conductor layers (42a-42e), said conductor layers being interposed between said substrate (41) and said cover film.

17. The apparatus according to claim 14, further including a visco-elastic layer (80), provided between said conductor layers (42a-42e) and said cover film (43), for damping vibration of each of said wiring suspensions (45).

18. The apparatus according to claim 14, characterized in that said conductor layers comprise first and second conductor layer portions (42a-42e) provided to sandwich said substrate (41).

19. The apparatus according to claim 18, characterized in that each of said wiring suspensions (45) has a bent portion, which is bent such that said first conductor layer portions (42a-42c) are situated on the inside, and said first conductor layer portions are thinner than said second conductor layer portions (42d, 42e) at said bent portion.

20. The apparatus according to claim 14, characterized in that each of said wiring suspensions (45) is formed of a flexible printed wiring member.

21. The apparatus according to claim 14, characterized in that each of said wiring suspensions (45) has a rectangular shape comprising a pair of first plate spring portions (60) defined in a plane perpendicular to said second direction and a pair of second plate spring portions (61) provided between said first plate spring portions and defined in a plane perpendicular to said first direction, each wiring suspension being connected to said base frame (51) via one of said first plate spring portions and connected to said optical head (47) via the other of said first plate spring portions.

22. The apparatus according to claim 21, characterized in that a difference between a spring constant in the second direction of each of said first plate spring portions (60) and a spring constant in the first direction of each of said second plate spring portions (61) is within 20 % of the greater one of said spring constants.

23. The apparatus according to claim 21, characterized in that the width of said conductor layers (42a-42e) is less in middle portions of said first and second plate spring portions (60, 61) than in both end portions thereof.

24. The apparatus according to claim 14, characterized in that each of said wiring suspensions (105A, 105B) comprises a plate spring portion defined in a curved plane extending in parallel to a third direction perpendicular to said first and second directions, and each of said wiring suspensions being connected to said base frame (111) and said optical head (107) via both end portions of said plate spring portion.

25. The apparatus according to claim 24, characterized in that said optical head (107) includes a casing of a plastic material and said casing and said wiring suspensions (105A, 105B) are coupled by injection molding.

26. The apparatus according to claim 24, characterized in that said base frame (111) is formed of a plastic material, and said base frame and said wiring suspensions (105A, 105B) are coupled by injection molding.
